# EUROPEAN PATENT APPLICATION

(11) **EP 2 869 415 A1**
(43) Date of publication of application: **06.05.2015**
(21) Application number: 13191419.4
(22) Date of filing: 04.11.2013
(51) Int. Cl.: H02G 3/04, H02G 11/00, F25J 1/00, F25J 1/02

(54) **Modular hydrocarbon fluid processing assembly, and methods of deploying and relocating such assembly**

(71) Applicant: SHELL INTERNATIONAL RESEARCH MAATSCHAPPIJ B.V., 2596 HR Den Haag (NL)
(72) Inventor: Van de Graaf, Jan Willem, 2596HR The Hague (NL); Lim, Kok-Chieng, 2288GS Rijswijk (NL)
(74) Representative: Matthezing, Robert Maarten

(57) **Abstract**

A modular hydrocarbon fluid processing assembly is proposed, having a first module frame comprising a first mechanical support structure supporting a process floor and process equipment configured on the process floor and a second module frame comprising a second mechanic support structure supporting at least electrical control equipment. The process equipment on the first process floor includes at least an electric motor. Electric cabling is configured between the first and second module frames for controlling the electric motor by means of the electrical control equipment. The first module frame and the second module frame are horizontally translatable away from or towards each other, while the electric cabling is supported in a foldable cable tray.

## Description

In a first aspect, the present invention relates to a modular hydrocarbon fluid processing assembly. In further aspects the invention relates to methods of deploying and relocating such a modular hydrocarbon fluid processing assembly.

Hydrocarbon processing assemblies can be adopted to carry out one or more of a variety of gas processing operations. A non-limiting list of examples of gas processing operations includes: acid gas removal from natural gas, gas conditioning of gas streams produced from hydrocarbon wells, gas conditioning for pipe line feeds, natural gas liquids extraction, liquefaction of natural gas wherein cooling natural gas and turning it into liquefied natural gas (LNG).

Traditionally hydrocarbon fluid processing plants are stick built at the location where the plant is intended to be operated. A new development in the hydrocarbon fluid processing industry is modularisation of plants, wherein the hydrocarbon fluid assembly is assembled from individual modules each mounted on a transportable module frame. Each module frame comprises a process floor and process equipment configured on the process floor. The module frames can be prefabricated and/or fully pre-assembled with process equipment. The module frames are individually transportable to a deployment site where they can be coupled together to form a fully functional hydrocarbon processing assembly. This allows to shift labour and construction work from the deployment site to specialized yards or workshops, and thereby to accomplish relatively fast deployment on site.

Shell recently introduced the Shell Movable Modular Liquefaction System (MMLS). Reference is made to a paper "NATURAL GAS IN TRANSPORT: TOMORROW'S FUEL TODAY" by James Burns, presented at the 17TH Int. Conf. & Exhibit. on Liquefied Natural Gas (LNG17), Houston, Texas, 16-19 April 2013. MMLS is a liquefaction plant which converts natural gas into LNG. MMLS consists of fully factory pre-commissioned container-sized modules, which are easily transportable via road, rail or waterways. They require minimal on-site installation, allowing for fast construction. The different modules of the MMLS plant are containerized or skid mounted. Basic design units include a simple inlet separation facility, an amine system, a dehydration unit, trace contamination removal, a cold box, a cold separator and demethanizer, refrigerant compressors, LNG storage and a flare system. Some units are optional and can be deployed as required, depending on the feed gas quality.

MMLS has relatively small module frames. Module frames may also be larger and carrying more process equipment. As example, reference is made to a 2012 brochure "WORLD-CLASS LNG CAPABILITIES" published by Black & Veatch, which shows a module frame indicated to be a typical 1 MMTPA liquefaction train assembled on one. The brochure also discloses a schematic process flow transforming a feed gas into LNG. The process includes compressors driven by a turbine/motor.

A problem associated with modular hydrocarbon processing assemblies comprising an electric motor is that generally a motor control center is needed. Preferably the motor control center should be positioned maintaining a sufficient safety distance from potentially hazardous modules such as hydrocarbon processing modules, as sparks in electrical control equipment may form an uncontrolled ignition source.

In case of modular hydrocarbon fluid processing assemblies, the motor control center is typically associated with significant amounts of electrical and instrumentation work that needs to completed at the deployment site, in order to connect electrical control equipment on one module frame with electric motor(s) that may be provided on another module frame.

In accordance with the first aspect of the present invention, there is provided a modular hydrocarbon fluid processing assembly, comprising:
- a first module frame comprising a first mechanical support structure supporting a process floor and process equipment configured on the process floor, said process equipment comprising an electric motor;
- a second module frame comprising a second mechanic support structure supporting at least electrical control equipment; and
- electric cabling configured between the first and second module frames for controlling the electric motor by means of the electrical control equipment, wherein the first module frame and the second module frame are horizontally translatable away from or towards each other, while the electric cabling is supported in a foldable cable tray.

In accordance with a second aspect of the invention, there is provided a method of deploying a modular hydrocarbon fluid processing assembly as described herein, comprising:
- offloading a modular hydrocarbon fluid processing assembly according to any one of claims 1 to 10 from a transportation deck at a location of destination, whereby the foldable cable tray is in a folded condition;
- positioning the assembly at a deployment site;
- horizontally translating the first module frame and the second module frame away from each other, while the foldable cable tray which supports the electric cabling unfolds from a folded configuration to an unfolded configuration.

In a further aspect, there is provided method of relocating a modular hydrocarbon fluid processing assembly as described herein, comprising:
- at a location of origin horizontally translating the first module frame and the second module frame towards each other, while the foldable cable tray which supports the electric cabling folds from the unfolded configuration to a folded configuration;
- lifting the hydrocarbon fluid processing assembly from the location of origin; and
- loading the hydrocarbon fluid processing assembly onto a transportation deck whereby the foldable cable tray is in said folded configuration.

The invention will be further illustrated hereinafter by way of example only, and with reference to the non-limiting drawing in which;
Fig. 1 schematically shows an embodiment of a modular hydrocarbon fluid processing assembly according to the invention with a foldable cable tray in a folded condition;
Fig. 2 schematically shows the embodiment of Fig. 1 with the foldable cable tray in an unfolded condition;
Fig. 3 schematically shows a side view of an example of a pivoting connector for use in the modular hydrocarbon fluid processing assembly of Figs. 1 and 2;
Fig. 4 (a to d) illustrates in top view various stages of a method of deployment of a modular hydrocarbon fluid processing assembly according to an embodiment of the invention;
Fig 5 (a to c) illustrates a preferred embodiment of a pivoting connector in three conditions of deployment.

For the purpose of this description, a single reference number will be assigned to a line as well as a stream carried in that line. Same reference numbers refer to similar components. The person skilled in the art will readily understand that, while the invention is illustrated making reference to one or more a specific combinations of features and measures, many of those features and measures are functionally independent from other features and measures such that they can be equally or similarly applied independently in other embodiments or combinations.

A improved modular hydrocarbon fluid processing assembly is presently proposed, having a first module frame comprising a first mechanical support structure supporting a process floor and process equipment configured on the process floor, and a second module frame comprising a second mechanic support structure supporting at least electrical control equipment. The process equipment on the first process floor includes at least an electric motor. Electric cabling is configured between the first and second module frames for controlling the electric motor by means of the electrical control equipment. The first module frame and the second module frame are horizontally translatable away from or towards each other, while the electric cabling is supported in a foldable cable tray.

The foldable cable tray allows for the electric cabling between first and second module frames to be completed prior to offloading the first and second module frames at a destination location. The first and second module frames can be offloaded together, with the foldable cable tray in a folded condition. With the cable tray in folded condition the module frames together can be close together and relatively compact.

Subsequently, the assembly can be positioned at a deployment site, where the first module frame and the second module frame only need to be separated from each other by horizontally translating the first module frame and the second module frame away from each other, while the foldable cable tray which supports the electric cabling unfolds from a folded configuration to an unfolded configuration. It is conceived that horizontally translating the first module frame and the second module frame away from each other does not require translating both the first module frame and the second module frame. Horizontally translating the first module frame and the second module frame away from each other can be suitably accomplished by relative movement between the first module frame and the second module frame whereby one of the two is kept stationary on the ground while only the other of the two is actually translated.

With the cable tray in the unfolded condition, the second module frame with the electrical control equipment electrical can be operated at a safe distance from the first module frame while electrical and instrumentation work can be completed prior to offloading the first and second module frames, for instance at fabrication site elsewhere.

It thus becomes possible to extend the advantages of shop building over stick building to more of the electrical and instrumentation work than hitherto possible. Advantages include faster deployment at the deployment site, and possibly better conditioned work spaces that are possibly less exposed to adverse climatologic conditions than may be the case at the deployment site.

The electrical and instrumentation work associated with connecting electric cabling between successive module frames is more labour intensive and susceptible to errors than is the case for connecting piping and flow lines. In this respect, electrical cabling is not equivalent to piping.

In the context of the present description, a module frame may comprise a complete pre-assembled process line-up (discounting utilities such as process control or power generation) or a complete pre-assembled portion of a process line-up. In the latter case the full process line-up comprises multiple module frames. Other module frames may comprise auxiliary equipment related to power generation and similar.

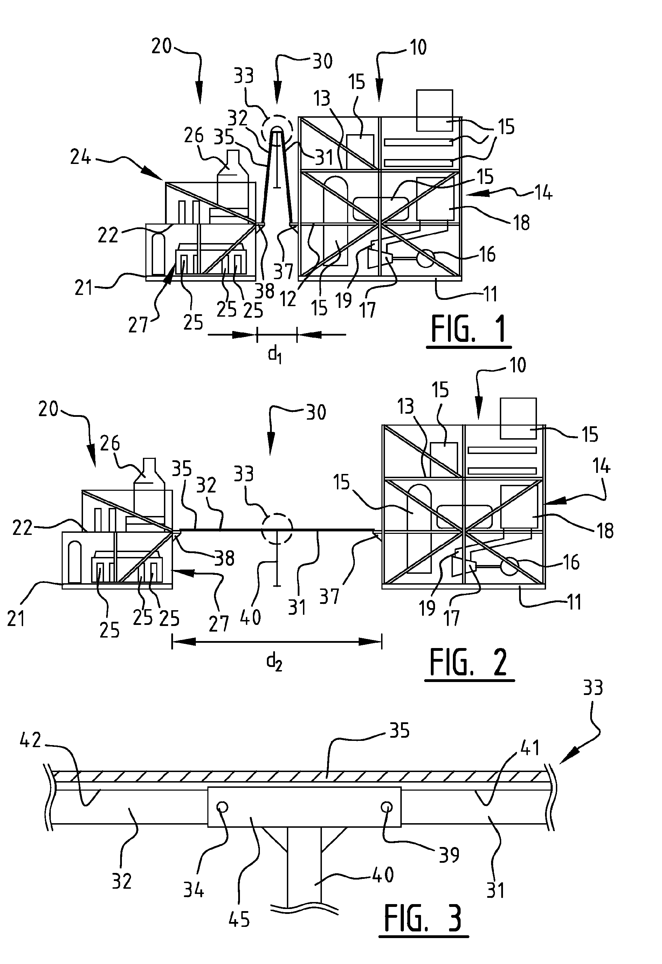

Figures 1 and 2 both schematically show side views of an embodiment of a modular hydrocarbon fluid processing assembly. A first module frame 10 comprises a first mechanical support structure 14, supporting a process floor 11 and process equipment configured on the process floor 11. Additional process floors may be provided, depending on the design and nature of the module. For illustrative purposes, the schematic representation of the first module frame 10 in Figs. 1 and 2 comprises a first elevated process floor 12 and a second elevated process floor 13 as well.

The process equipment comprises an electric motor 16 as well as other process equipment such as pipes, heat exchangers, separators, and distillation columns, collectively indicated with reference number 15. The process equipment may comprise a compressor 17. In such embodiments, the electric motor 16 may be arranged in driving engagement with the compressor 17. Multiple electric motors may be provided and/or multiple compressors.

The first module frame 10 may optionally further comprise a heat exchanger 18, configured to cool a hydrocarbon fluid in indirect heat exchange with a refrigerant stream 19. The heat exchanger 18 may be configured in fluid connection with the compressor 17, for compressing the refrigerant stream 19.

A second module frame 20 comprises a second mechanic support structure 24, which supports at least electrical control equipment 25. Optionally, the electrical control equipment is located in a motor control center building 27 as configured on the second module frame 20. In addition, the second module frame 20 may support utility equipment such as power generation equipment schematically indicated at 26. It is not a necessary requirement for the second module frame 20 to be manned continuously.

As for the first module frame 10, also the second module frame 20 suitably comprises a second mechanical support structure 24, which may support a second process floor 21. Additional second process floors may be provided, depending on the design and nature of the module. For illustrative purposes, the schematic representation of the second module frame 20 in Figs. 1 and 2 comprises an elevated second process floor 22. More elevated second process floors may be provided as needed.

Electric cabling 35 is configured between the first (10) and second (20) module frames. The electric cabling is supported in a foldable cable tray, generally indicated at 30. The electric cabling 35 is connected to enable controlling of the electric motor 16 on the first module frame 10 with the electrical control equipment 25 on the second module frame 20. Suitably, the foldable cable tray 30 is on a first end mechanically connected to the first module frame 10 and on a second end mechanically connected to the second module frame 20. These mechanical connections may comprise pivotable module connections (37, 38).

The first module frame 10 and the second module frame 20 are horizontally translatable (relative to each other) away from or towards each other, while the electric cabling 35 remains supported in the foldable cable tray 30. In the side view of Figure 1, the cable tray is in a folded condition. In this condition the first module frame and the second module frame may be separated from each other by a transportation distance of d₁. Figure 2 corresponds to a situation where the first module frame 10 and the second module frame 20 have been moved apart by relative horizontal translation over a translation distance. The separation distance between the first and second module frames in this condition is indicated as deployment distance d₂. The deployment distance d₂ generally exceeds the transportation distance d₁.

Preferably, the first module frame 10 and the second module frame 20 are horizontally translatable relative to each other in a straight translation line, which intersects both the first module frame 10 and the second module frame 20. This means that, from the point of view of one of the first and second module frames, the other module frame is moving in an exclusively radial direction without any rotation.

As illustrated in Figures 1 and 2, the foldable cable tray 30 comprises a first side support frame 31 and a second side support frame 32. The first side support frame 31 and said second side support frame 32 are connected to each other via one pivoting connector 33. A first side support plane 41 is defined on the first side support frame 31, on which the electric cabling 35 rests. Similarly, second side support plane 42 is defined on the second side support frame 32, on which the electric cabling 35 rests as well. The first side support plane 41 is located between the pivoting connector 33 and the first module frame 10 and the second side support plane 42 is located between the pivoting connector 33 and the second module frame 20. The first and second side support planes are indicated in Figure 3.

Figure 3 also shows a schematic embodiment of the pivoting connector 33. In this embodiment, the pivoting connector 33 comprises two pivoting axes, which extend parallel to each other, and are mechanically rigidly connected to each other by a connecting member 45. On one side of the connecting member 45, a first pivoting axis 39 of the two pivoting axes defines a pivoting connection between the connecting member 45 and the first side support frame 31. On the other side of the connecting member 45, a second pivoting axis 34 of the two pivoting axes defines a pivoting connection between the connecting member 45 and the second side support frame 32. The first and second pivoting axes are parallel to each other and preferably in a horizontal direction that is perpendicular to the translation line.

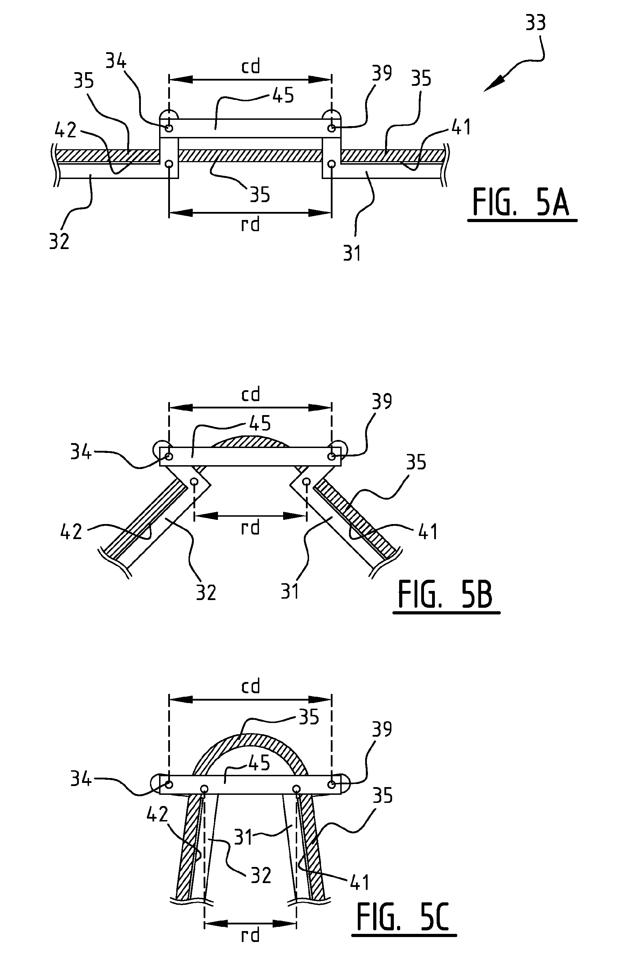

A support leg 40 is suitably rigidly connected to the connecting member 45 and protruding downward therefrom. The foldable cable tray 30 may suitably rest on this support leg 40 when in an unfolded condition. In addition, this support leg 40 provides for a suitable stabilizer weight ensuring that the connecting member 45 stays horizontally aligned during folding and unfolding transitions of the foldable cable tray 30. A preferred embodiment of the pivoting connector 33 will be further detailed below with reference to figures 5a to 5c.

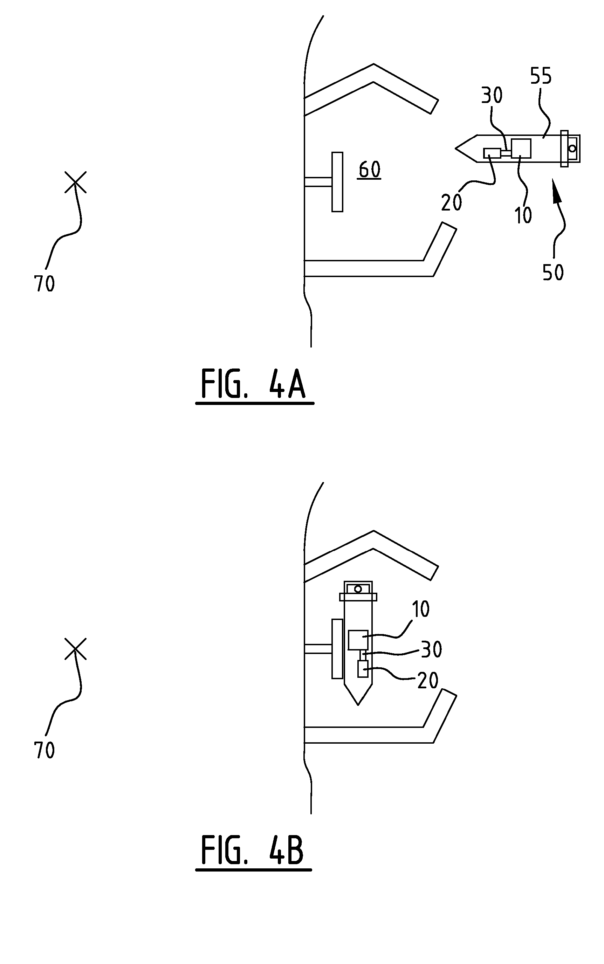

First, however, the general concept of deploying the modular hydrocarbon fluid processing assembly will be illustrated with reference to Figures 4a to 4d. The modular hydrocarbon fluid processing assembly, comprising the first module frame 10, the second module frame 20 and the foldable cable tray 30, arrives at a location of destination 60 on a transportation deck 55. The foldable cable tray 30 is in a folded condition. The transportation deck 55 may be supported on any suitable type of transportation vessel. Examples include but are not limited to a ship 50, a railway wagon, a truck. In the example of Figures 4a-b, the location of destination 60 is schematically represented as a shore site with a harbour bay, while the transportation deck 55 is assumed to be on ship 50. The location of destination 60 comprises a deployment site 70.

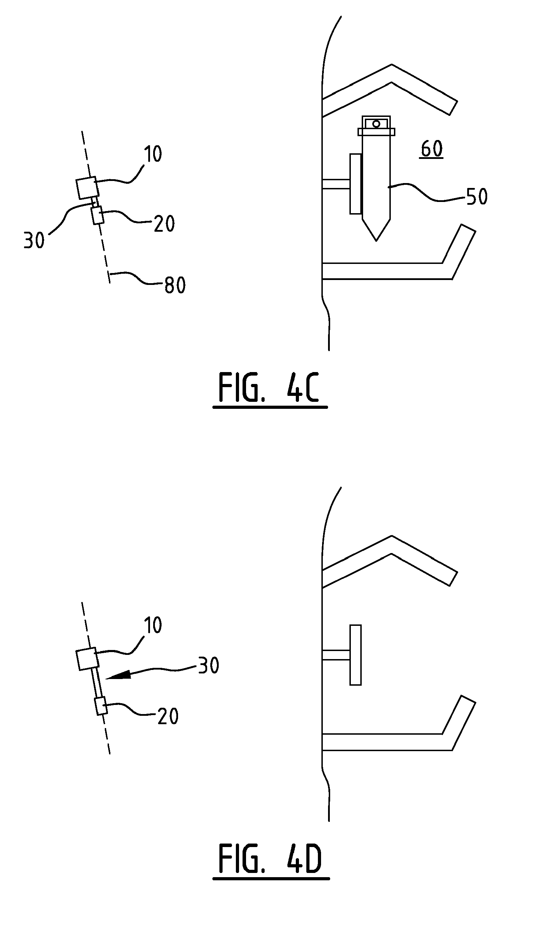

After off-loading from the transportation deck 55, the hydrocarbon fluid processing assembly is positioned at the deployment site 70. This is schematically shown in Figure 4c. The foldable cable tray 30 is still in said folded condition. Preferably, the first module frame 10 and the second module frame 20 are offloaded simultaneously, together, for instance by lifting them together. Tools and structures such as for example movable cranes and/or platforms may be employed for off-loading and positioning.

Once the hydrocarbon fluid processing assembly has been positioned at the deployment site, the first module frame 10 and the second module frame 20 are translated horizontally relative to each other and away from each other over a certain translation distance, while the foldable cable tray 30 which supports the electric cabling unfolds from the folded configuration to an unfolded configuration. Suitably, only one of the first and second module frames is moved. In the example shown in Figures 4c and 4d, only the second module frame 20 is translated while the first module frame 10 remains stationary. Preferably, the horizontal translation occurs over a straight translation line 80, which intersects both the first module frame 10 and the second module frame 20.

During the entire deployment procedure the electric cabling 35 remains intact and connected, as part of the electrical connection between the electric motor on the first module frame 10 and the electrical control equipment provided on the second module frame 20. Other connections, such as connecting the module frames to a piping system, still have to be established on site but the electrical and instrumentation work associated with connecting the electric motor with the electrical control equipment has already been completed.

The modular hydrocarbon fluid processing assembly may easily be relocated, roughly by following the inverse procedure as outline above. However, now the hydrocarbon fluid processing assembly is assumed to be located at a location of origin. At the location of origin, the first module frame and the second module frame are horizontally translated relative to each other and towards each other. This translation is preferably over the straight translation line. During this translation, the foldable cable tray, which supports the electric cabling, folds from the unfolded configuration to a folded configuration. The hydrocarbon fluid processing assembly is then lifted from the location of origin and loaded onto a transportation deck, whereby the foldable cable tray stays in the folded configuration.

Subsequently the modular hydrocarbon processing assembly may be transported from the location of origin to location of destination. The modular hydrocarbon fluid processing assembly may then be deployed as described above with reference to Figs. 4a-d. The location of destination may typically be at least 10 km away from the location of origin.

The transportation distance d₁, which as indicated in Fig. 1 corresponds to the distance of separation between the first module frame 10 and the second module frame 20 during their transportation, may for example be between 0.5 m and 5 m. Preferably the transportation distance is as short as possible to make the assembly as compact as possible for transportation.

The cable makes a bend in the area of the pivoting connector 33. The term "folded condition" does not necessarily mean that the cable has to be under a 180-degree bend angle. The invention can be described and understood without attributing an absolute meaning to the terms "folded" and "unfolded". The term "folded condition" and "unfolded condition" may simply be understood in mutually relative sense whereby in the folded condition the cabling is bended over a larger bend angle than in the unfolded condition.

Nonetheless, optionally the terms folded condition and unfolded condition may be defined relative to a critical angle, whereby the cable tray is in folded condition if the bend angle exceeds the critical angle and in unfolded condition if the bend angle is less than the critical angle. Preferably, the critical angle is 120°.

Nonetheless, in folded condition the bend angle may be significantly higher than the critical angle. In absolute terms, preferably the bend angle in folded condition may typically be between 155° and 180°, for example.

The term "bend angle" as used herein corresponds to the angle over which the cabling is bent, which corresponds to the angle of deviation from a straight path. Thus, bend angle may be defined by 180° minus the included angle between the first and second side support planes.

The deployment distance is maximal if the foldable cable tray is fully unfolded, in which case the electric cable 35 at the pivoting connection 33 may be fully unbent. This is the configuration as shown in Figure 2. However, it may be preferred to deploy the two module frames while maintaining a slightly smaller deployment distance and a small bend angle in the electric cables. By maintaining a bend angle of for instance 50°, the deployment distance is only about 10% less than the maximum possible, and with a bend angle of for instance 20° the deployment distance is only about 2% less than the maximum possible. These are only small sacrifices in deployment distance when compared to the benefits of leaving a small bend angle, as a leaving a bend angle in facilitates translating the two module frames towards each other again. This may be needed in case the hydrocarbon fluid assembly is to be relocated in the future. Thus, in a preferred embodiment the unfolded configuration of the foldable cable tray corresponds to a residual bend angle in the electric cabling of less than 50°, preferably of between 20° and 50°, although in some embodiments it may be preferred to limit the bend angle in the electric cabling at the pivoting connection 33 to less than 20°.

The desired value of the deployment distance d₂ is subject to safety requirements, which can depend on a variety of circumstances including for instance the specific type of hydrocarbon fluid processing and hydrocarbon fluids involved. As an example, a deployment distance may be for instance in a range of from 5 m to 50 m.

Regardless of the absolute values of d₁ and d₂, the first and second support frames may have been moved apart over a translation distance of for instance up to 45 m. Translation distance in this context corresponds to the absolute difference between d₂ and d₁.

The hydrocarbon fluid processing in the present modular hydrocarbon fluid processing assembly can be any type of hydrocarbon fluid processing that makes use of an electric motor. An electric motor is often used in hydrocarbon fluid refrigeration processes, including liquefaction processes. In such cases the electric motor is arranged in driving engagement with a compressor, which in turn is used to re-compress a refrigerant stream after the refrigerant stream has been indirectly heat exchanged against the hydrocarbon fluid in order to extract heat from the hydrocarbon fluid. The electric motor may either be the only driver or it may be an additional helper in addition to for instance a gas turbine or steam turbine.

The second module frame 20 may thus house part of or an entire hydrocarbon liquefaction process, in particular any natural gas liquefaction process producing liquefied natural gas, and the invention is not limited by the specific choice of cooling process. Examples of suitable hydrocarbon fluid processes include single refrigerant cycle processes (usually single mixed refrigerant - SMR - processes, such as PRICO described in the paper "LNG Production on floating platforms" by K R Johnsen and P Christiansen, presented at Gastech 1998 (Dubai), but also possible is a single component refrigerant such as for instance the BHP-cLNG process also described in the afore-mentioned paper by Johnsen and Christiansen); double refrigerant cycle processes (for instance the much applied Propane-Mixed-Refrigerant process, often abbreviated C3MR, such as described in for instance US Patent 4,404,008, or for instance double mixed refrigerant - DMR - processes of which an example is described in US Patent 6,658,891, or for instance two-cycle processes wherein each refrigerant cycle contains a single component refrigerant); and processes based on three or more compressor trains for three or more refrigeration cycles (an example is described in US Patent 7,114,351). Other examples of suitable hydrocarbon liquefaction processes are described in: US Patent 5,832,745 (Shell SMR); US Patent 6,295,833; US Patent 5,657,643 (both are variants of Black and Veatch SMR); US Pat. 6,370,910 (Shell DMR). Another suitable example of DMR is the so-called Axens LIQUEFIN process, such as described in for instance the paper entitled "LIQUEFIN: AN INNOVATIVE PROCESS TO REDUCE LNG COSTS" by P-Y Martin et al, presented at the 22nd World Gas Conference in Tokyo, Japan (2003). Other suitable three-cycle refrigeration processes include for example US Pat. 6,962,060; WO 2008/020044; US Pat. 7,127,914; DE3521060A1; US Pat. 5,669,234 (commercially known as optimized cascade process); US Pat. 6,253,574 (commercially known as mixed fluid cascade process); US Pat. 6,308,531; US application publication 2008/0141711; Mark J. Roberts et al "Large capacity single train AP-X(TM) Hybrid LNG Process", Gastech 2002, Doha, Qatar (13-16 October 2002). These suggestions are provided to demonstrate wide applicability of the invention, and are not intended to be an exclusive and/or exhaustive list of possibilities. Not all examples listed above employ electric motors as refrigerant compressor drivers. It will be clear that any drivers other than electric motors can be replaced by or supplemented with an electric motor to be suitable for application in the context of the present invention.

A problem associated with the use of a foldable cable tray as proposed in the present invention is that the electric cabling supported by the foldable cable tray may be exposed to mechanical straining as a result of folding and/or unfolding of the cable tray. Figures 5a-c illustrate one way of reducing the straining. In this case, an open gap is maintained between the first side support plane 41 and the second side support plane 42 at the pivoting connector 33. As described above, also in this embodiment the pivoting connector 33 comprises two pivoting axes, which extend parallel to each other, and are mechanically rigidly connected to each other by a connecting member 45. The first pivoting axis 39 extends parallel to the first side support plane 41 but not in the first side support plane 41. Relative to the first side support plane 41, the first pivoting axis 39 is displaced perpendicular from a first reference line 49 in said first support plane 41. Effectively, the first reference line 49 represents a perpendicular projection of the first pivoting axis 39 on the first support plane 41. Consequently, the first reference line 49 and the first pivoting axis 39 extend parallel to each other.

Likewise, the second pivoting axis 34 extends parallel to the second side support plane 42 at a second fixed position (fixed relative to the second side support plane 42) that is displaced perpendicular from a second reference line 44 in the second support plane 42. The second reference line 44 and the second pivoting axis 34 extend parallel to each other.

The connecting member 45 maintains a constant connector distance (cd) between the first pivoting axis 39 and the second pivoting axis 34. The first reference line 49 and the second reference line 44 are at a reference distance (rd) from each other, but the reference distance is variable during folding and/or unfolding transitions. The reference distance rd is smaller than the connector distance cd (rd < cd) when the foldable cable tray is in a folded configuration as represented in Figs. 5b and 5c). In the fully unfolded configuration as represented in Fig. 5a, wherein the bend angle is zero degrees, the reference distance is equal to the connector distance (rd = cd). The reference distance increases as the foldable cable tray is transitioning in an unfolding direction and it decreases as the foldable cable tray is transitioning in a folding direction.

With such a pivoting connector the straining imposed on the electrical cabling can be reduced. The residual straining will depend on the amount of displacement between the reference lines and the corresponding pivoting axes. Finding the optimal amount of displacement can easily be determined numerically under an assumption that the part of the electric cable 35 that bridges the gap between the first and second side support planes forms an arc of a circle. The reference distance corresponds to the chord, and it should vary with bend angle in order to keep the arc length a constant.

The same principle can also be applied in the first and second pivotable module connectors (37, 38). However, the pivotable module connectors may employ only a single pivoting axis each, and thus the detailed engineering of the geometry may have to done assuming a different bending behaviour.

The person skilled in the art will understand that the present invention can be applied and/or carried out in many various ways without departing from the scope of the appended claims.

## Claims

1. A modular hydrocarbon fluid processing assembly, comprising:
- a first module frame comprising a first mechanical support structure supporting a process floor and process equipment configured on the process floor, said process equipment comprising an electric motor;
- a second module frame comprising a second mechanic support structure supporting at least electrical control equipment; and
- electric cabling configured between the first and second module frames for controlling the electric motor by means of the electrical control equipment, wherein the first module frame and the second module frame are horizontally translatable away from or towards each other, while the electric cabling is supported in a foldable cable tray.

2. The assembly of claim 1, wherein the foldable cable tray is on a first end mechanically connected to the first module frame and on a second end mechanically connected to the second module frame.

3. The assembly of claim 1 or 2, wherein the electrical control equipment is located in a motor control center building, which motor control center building is configured on the second module frame.

4. The assembly of any one of the preceding claims, wherein the first module frame further comprises a compressor, wherein the electric motor is arranged in driving engagement with the compressor.

5. The assembly of claim 4, wherein the first module frame further comprises a heat exchanger configured to cool the hydrocarbon fluid in indirect heat exchange with a refrigerant stream, wherein the heat exchanger is in fluid connection with the compressor for compressing the refrigerant stream.

6. The assembly according to any one of the preceding claims, wherein the first module frame and the second module frame are horizontally translatable relative to each other in a straight translation line that intersects both the first module frame and the second module frame.

7. The assembly according to claim 6, wherein the foldable cable tray comprises a first side support frame supporting a first side support plane on which the electric cabling rests, and a second side support frame supporting a second side support plane on which the electric cabling rests, wherein said first side support frame and said second side support frame are connected to each other via a pivoting connector whereby the first side support plane is located between the pivoting connector and the first module frame and the second side support plane is located between the pivoting connector and the second module frame, wherein the at least one pivoting connector comprises a first pivoting axis and a second pivoting axis, wherein the first pivoting axis and the second pivoting axis are parallel to each other and in a horizontal direction that is perpendicular to the translation line, whereby the first pivoting axis and the second pivoting axis are mechanically rigidly connected to each other with a connecting member which is pivotably connected to the first side support frame about the first pivoting axis and pivotably connected to the second side support frame about the second pivoting axis.

8. The assembly according to claim 7, further comprising a support leg downwardly protruding from the connecting member and rigidly connected therewith.

9. The assembly according claim 7 or 8, wherein an open gap is maintained between the first and second side support planes at the pivoting connector, and wherein the first pivoting axis extends parallel to the first side support plane at, relative to the first side support plane, a first fixed position which is displaced perpendicular from a first reference line in said first support plane whereby the first reference line and the first pivoting axis extend parallel to each other, and wherein the second pivoting axis extends parallel to the second side support plane at, relative to the second side support plane, a second fixed position that is displaced perpendicular from a second reference line in said second support plane whereby the second reference line and the second pivoting axis extend parallel to each other, and wherein the connecting member maintains a constant connector distance between the first pivoting axis and the second pivoting axis, and whereby the first reference line and the second reference line are at a reference distance from each other, which reference distance is smaller than the connector distance when the foldable cable tray is in a folded configuration and which reference distance increases as the foldable cable tray is transitioning from said folded configuration to an unfolded configuration.

10. The assembly according to any one of claim 6 to 9, wherein the first module frame and the second module frame are horizontally translatable relative to each other over a translation distance of up to 45 m.

11. A method of deploying a modular hydrocarbon fluid processing assembly, comprising:
- offloading a modular hydrocarbon fluid processing assembly according to any one of claims 1 to 10 from a transportation deck at a location of destination, whereby the foldable cable tray is in a folded condition;
- positioning the assembly at a deployment site;
- horizontally translating the first module frame and the second module frame away from each other, while the foldable cable tray which supports the electric cabling unfolds from a folded configuration to an unfolded configuration.

12. The method according to claim 11, wherein during said offloading the first module frame and the second module are lifted together with the cable tray in said folded configuration.

13. A method of relocating a modular hydrocarbon fluid processing assembly according to any one of claims 1 to 10, comprising:
- at a location of origin horizontally translating the first module frame and the second module frame towards each other, while the foldable cable tray which supports the electric cabling folds from the unfolded configuration to a folded configuration;
- lifting the hydrocarbon fluid processing assembly from the location of origin; and
- loading the hydrocarbon fluid processing assembly onto a transportation deck whereby the foldable cable tray is in said folded configuration.

14. The method of relocating according to claim 13, wherein subsequently to the steps of claim 13:
- transporting the modular hydrocarbon processing assembly according to any one of claims 1 to 10 from the location of origin to a location of destination; and subsequently
- deploying the modular hydrocarbon fluid processing assembly in accordance with the method of claim 10 or 11, wherein said offloading of the modular hydrocarbon fluid processing assembly from the transportation deck is performed in the location of destination.

15. the method of claim 14 wherein the location of destination is at least 10 km away from the location of origin.
